# EUROPÄISCHE PATENTSCHRIFT

(11) **EP 1 848 263 B1**
(45) Veröffentlichungstag und Bekanntmachung des Hinweises auf die Patenterteilung: **29.09.2010**
(21) Anmeldenummer: 06708189.3
(22) Anmeldetag: 10.02.2006
(51) Int. Cl.: A01C 9/02, A01B 49/06

(54) **KOMBINIERTE LANDWIRTSCHAFTLICHE MASCHINE**
COMBINED AGRICULTURAL MACHINE
MACHINE AGRICOLE COMBINEE

(30) Priorität: 17.02.2005 DE 102005007521; 03.05.2005 DE 102005020563; 03.08.2005 DE 102005037114
(43) Veröffentlichungstag der Anmeldung: 31.10.2007
(60) Teilanmeldung: 10150200.3
(73) Patentinhaber: Heiss (Jun.), Andreas, 85104 Pförring-Dötting (DE)
(72) Erfinder: Heiss (Jun.), Andreas, 85104 Pförring-Dötting (DE)
(74) Vertreter: Bergmeier, Werner
(86) Internationale Anmeldenummer: PCT/EP2006/050846
(87) Internationale Veröffentlichungsnummer: WO 2006/087298

(56) Entgegenhaltungen:
- DE-A1- 19 710 036
- DE-B1- 2 900 985
- FR-A- 2 769 459
- GB-A- 2 079 572
- NL-C2- 1 014 691

## Beschreibung

Die vorliegende Erfindung betrifft eine kombinierte landwirtschaftliche Maschine, welche eine Pflanzeinrichtung sowie eine nachgeordnete Einrichtung zum Enddammaufbau umfasst. Die Pflanzeinrichtung ist insbesondere eine Kartoffellegeeinrichtung und weist wenigstens einen Vorratsbehälter, eine diesem zugeordnete Entnahmeeinrichtung sowie eine Setzschar auf.

Derartige Maschinen, die den Arbeitsgang der Pflanzung sowie den Dammaufbau in einer Maschine kombinieren, sind aus dem Stand der Technik bekannt. Insbesondere sind hierbei Kartoffellegemaschinen bekannt, welche mit verschiedenen Werkzeugen zum Enddammaufbau ausgerüstet sind, z. B. mit Häufelkörpern im alleinigen Einsatz, mit Häufelkörpern mit Stabwalzen oder auch in Kombination mit einem Dammformblech. Die Saatbeetvorbereitung muss hierbei in einem eigenen Arbeitsgang beispielsweise mittels einer Kreiselegge durchgeführt werden. Derartige Maschinen sind jedoch nur auf leichten bis mittleren Böden einsetzbar, während auf schwereren. Böden keine ausreichend kleinen Erdfraktionen zum Dammaufbau erzielt werden können. Auf schwereren Böden muss daher der Enddamm in einem weiteren Arbeitsgang beispielsweise mittels einer Dammfräse aufgebaut werden. Durch das nachträgliche Fräsen der Dämme in einem weiteren Arbeitsgang kann ein seitlicher Versatz auftreten, so dass die Lage der Pflanzknollen erheblich von der Dammmitte abweichen kann, was zu seitlichem Herauswachsen der Knollennester führen kann. Dieses Problem tritt in besonders starkem Maße bei der Bearbeitung eines Seitenhanges auf.

Zur Lösung dieses Problems beschreibt die DE 197 10 036 C2 eine Legemaschine, bei welcher an einem Maschinenrahmen unmittelbar hinter den Furchenziehern eine Dammfräse angeordnet ist. Durch die Zusammenfassung von Legemaschine und Dammfräse zu einer einzigen kombinierten Maschine tritt das Problem des seitlichen Versatzes nicht mehr auf. Weiterhin konnten mit dieser Vorrichtung bereits zwei Arbeitsgänge zu einem Arbeitsgang zusammengefasst werden, was eine Kraftstoffersparnis und eine Erhöhung des Ernteertrags durch Verminderung des durch Sonneneinstrahlung bedingten Grünanteils der Ernte ergibt. Derartige Maschinen sind auch für schwere Böden einsetzbar. Ein vorgeschalteter Arbeitsgang zur Saatbeetbereitung ist jedoch auch bei dieser Vorrichtung nötig. Durch das anschließende Überfahren des vorbereiteten Bodens mit einer Legemaschine, mit einer Maschine zur Dammformung oder auch mit der beschriebenen kombinierten Maschine, wird jedoch der bereits gelockerte Boden wieder verdichtet.

Die NL 1 014 691 C2 zeigt eine kombinierte Kartoffelpflanzmaschine, welche die Arbeitsschritte Saatbeetbereitung, Pflanzen und Dammformen in einem einzigen Arbeitsgang ermöglicht. An einem Rahmen der Maschine sind hierzu eine Pflanzeinrichtung, Fräsmittel und eine Einrichtung zur Dammformung angeordnet. Der Rahmen ist auf Stützrädern abgestützt und vertikal beweglich mit diesen verbunden. Die Höhe des Rahmens in Bezug auf die Stützräder kann somit korrigiert werden, wenn durch einen Sensor ein tieferes Einsinken der Maschine in den Boden registriert wird. Die Arbeitstiefe der Maschine kann hierdurch konstant gehalten werden. Durch die Stützräder kann es auch hier zu einer ungleichmäßigen Verdichtung des Bodens kommen, was sich nachteilig auf das Wachstum der Kartoffeln auswirken kann.

Aufgabe der Erfindung ist es daher, eine Maschine vorzuschlagen, welche eine Bündelung von Arbeitsgängen ermöglicht und darüber hinaus den bereits gelockerten Boden in nur geringem Maße verdichtet.

Die Aufgabe wird gelöst mit einer kombinierten landwirtschaftlichen Maschine gemäß Anspruch 1.

Eine kombinierte landwirtschaftliche Maschine umfasst eine Pflanzeinrichtung, insbesondere eine Kartoffellegeeinrichtung, sowie eine nachgeordnete Einrichtung zum Enddammaufbau. Die Pflanzeinrichtung besteht aus wenigstens einem Vorratsbehälter, einer diesem zugeordneten Entnahmeeinrichtung und einer Setzschar. Erfindungsgemäß ist in Fahrtrichtung vor der Pflanzeinrichtung ein Lockerungswerkzeug zur Saatbeetbereitung angeordnet. Weiterhin ist in Fahrtrichtung vor dem Lockerungswerkzeug zum Zerkleinern des Bodens und zum Abstützen der Maschine ein oder mehrere Räder angeordnet. In Fahrtrichtung nach dem Lockerungswerkzeug weist die Maschine hingegen keine weiteren Räder auf. Durch die Anordnung eines Lockerungswerkzeuges vor der Pflanzeinrichtung in einer Maschine, kann ein dem Pflanzen vorgeschalteter Arbeitsgang zur Bodenvorbereitung entfallen. Erfindungsgemäß sind hierbei in Fahrtrichtung nach dem Lockerungswerkzeug keine die Maschine abstützenden Räder mehr angeordnet, so dass eine Nachverfestigung des bereits gelockerten Bodens nicht mehr stattfinden kann. Ein oder mehrere Räder zum Abstützen des Bodens sind in Fahrtrichtung vor dem Lockerungswerkzeug angeordnet. Im Boden vorhandene Kluten werden hierdurch bereits zerdrückt und zerkleinert, wodurch die anschließende Pflanzung und Dammbildung erheblich erleichtert werden. Ein seitlicher Versatz, welcher zu einer außer mittigen Ablage des Pflanzgutes in den Dämmen führt, ist durch die Anordnung der Werkzeuge in einer Maschine ebenfalls ausgeschlossen. Die Krümelstruktur des Bodens kann hierdurch ebenfalls verbessert werden.

Die Räder der Maschine sind hierbei mit Breitreifen versehen, die die Bearbeitungsbreite der Maschine weitgehend überdecken. Hierdurch wird eine optimale Vorbereitung durch Zerdrücken und Zerkleinern der im Boden enthalten Kluten mittels der Räder erreicht. Wegen des geringeren Drucks ist der Einsatz von Breitreifen darüber hinaus besonders boden- und pflanzenschonend. Eine übermäßige Verfestigung des Bodens durch die Räder findet nicht statt. Die Maschine sinkt durch die breiteren Reifen weniger tief in den Boden ein, wodurch eine weitgehend konstante Pflanztiefe erreicht werden kann.

Vorzugsweise sind hierzu in Breitenrichtung der Maschine vier Räder angeordnet, wodurch sich ein vierspuriger Aufbau der Maschine ergibt.

Sind die Räder der Maschine in Breitenrichtung pendelnd aufgehängt, wird auch auf unebenen Böden oder an Seitenhängen eine exakte Tiefenführung und mittige Saatgutablage erreicht.

Eine bevorzugte Ausführungsform der Maschine sieht vor, dass die Entnahmeeinrichtung ein umlaufendes Becherwerk ist. Hierdurch kann eine besonders kompakte Bauweise der Maschine erreicht werden.

Ist das Becherwerk durch eine federbelastete Walze angetrieben, welche mit einem Profil der Räder in Eingriff steht, ist eine platzsparende und schwerpunktsgünstige Anordnung des Becherwerkes und des Vorratsbehälters für das Saatgut möglich. Darüber hinaus kann der Antrieb des Becherwerkes schlupffrei erfolgen. Bei angehobener Maschine ist die Walze außer Eingriff mit dem Reifenprofil, so dass das Becherwerk stehen bleibt.

Weiterhin ist es vorteilhaft, wenn das Lockerungswerkzeug als Kreiselegge ausgeführt ist. Hierdurch kann auch bei schweren Böden eine ausreichende Lockerung des Bodens erreicht werden. Ebenso ist jedoch auch eine Ausführung mit einem Zinkenrotor möglich.

Eine andere vorteilhafte Weiterbildung der Erfindung sieht vor, dass der Pflanzeinrichtung Häufelkörper oder Zudeckscheiben zugeordnet sind, welche den zu bildenden Damm bereits vorformen. Da durch die erfindungsgemäße Anordnung der Räder der Maschine jedoch keine Nachverdichtung des Bodens mehr stattfindet, sind diese nicht zwingend erforderlich.

Eine besonders vorteilhafte Ausführungsform der Erfindung sieht vor, dass zum Enddammaufbau ein Dammformblech nach der Pflanzeinrichtung angeordnet ist. Hierdurch können besonders feste und glatte Dämme erzielt werden, wodurch optimale Wachstumsbedingungen geschaffen werden. Ist das Dammformblech in seiner Neigung verstellbar, können Dammhöhe und die Flankenneigung eingestellt werden.

Eine andere Weiterbildung der Erfindung sieht vor, dass die Setzschar als Doppelscheibenschar ausgebildet ist. Pflanzenreste im Boden können durch die Scheibenschar zerschnitten und in den Boden eingearbeitet werden. Ist der Doppelscheibenschar zusätzlich ein Kammbrecher zugeordnet, kann eine besonders exakte Ablage des Pflanzgutes erfolgen.

Ebenfalls vorteilhaft ist es, wenn die Setzschar höhenverstellbar mit der Einrichtung zum Enddammaufbau, insbesondere einem Dammformblech, verbunden ist. Hierdurch kann auf einfache Weise erreicht werden, dass die Saatgutablage stets in der gleichen Tiefe bezogen auf den Dammscheitel erfolgt.

Vorteilhafterweise.ist die Maschine als gezogene Maschine ausgeführt und verfügt über ein eigenes Fahrwerk.

Daneben kann es bei mehrreihiger Ausführung der Maschine vorteilhaft sein, wenn die Maschine bei Straßenfahrt um 90° gedreht an einen Schlepper ankoppelbar ist. Die Räder der Maschine sind hierzu beispielsweise um 90° schwenkbar an der Maschine angeordnet. Hierdurch ist es auch möglich, eine größere Arbeitsbreite mit der Maschine zu überfahren und dennoch die für Straßenfahrt höchstzulässige Breite einzuhalten.

Gemäß einer anderen vorteilhaften Ausführung der Erfindung ist es vorteilhaft, wenn vor dem Lockerungswerkzeug eine Walze zum Zerkleinern des Bodens angeordnet ist. Auch hierdurch kann eine exakte Tiefenführung über die gesamte Bearbeitungsbreite und eine vorteilhafte Zerkrümelung des Bodens und Zerkleinerung von Kluten erreicht werden.

Ein besonders kompakter Aufbau der Maschine kann erreicht werden, wenn der Vorratsbehälter der Pflanzeinrichtung über dem Lockerungswerkzeug angeordnet ist und sich der Schwerpunkt der Maschine nahe der Radachse befindet. Stützräder, welche in Fahrtrichtung nach dem Lockerungswerkzeug angeordnet sind und den bereits gelockerten Boden wieder verfestigen könnten, sind hierbei nicht erforderlich. Vorzugsweise ist der Vorratsbehälter als hydraulischer Kippbunker ausgeführt. Dies ermöglicht eine optimale Gewichtsverteilung und sichert dennoch eine konstante Nachförderung des Pflanzgutes.

Eine andere vorteilhafte Ausführungsform der Erfindung sieht vor, dass das Lockerungswerkzeug zum Einsatz in andere Maschinen aus der Maschine entnehmbar ist. Das Lockerungswerkzeug kann hierbei unabhängig von der kombinierten Pflanzmaschine zur Bodenvorbereitung auch für andere Anbauverfahren verwendet werden.

Ebenfalls vorteilhaft ist es, wenn die Pflanzeinrichtung absattelbar an der Maschine angeordnet ist. Hierdurch ist es sowohl möglich, verschiedene Pflanz- bzw. Aussaateinrichtungen auf die Maschine aufzusatteln, als auch das Lockerungswerkzeug der Maschine alleine zu verwenden.

Zum Absatteln der Pflanzeinrichtung von der Maschine ist es besonders vorteilhaft, wenn der Vorratsbehälter mit der Entnahmeeinrichtung, der Setzschar und der Einrichtung zum Enddammaufbau eine Baueinheit bildet. Diese kann dann für sich aus der kombinierten landwirtschaftlichen Maschine entnommen werden und durch eine andere Aussaateinrichtung ersetzt werden.

Insbesondere kann anstelle der Pflanzeinrichtung eine Aussaateinrichtung für Getreide, beispielsweise eine Drillmaschine, auf die Maschine aufgesattelt werden, welche zumindest einen Vorratsbehälter, eine Entnahmeeinrichtung für das Saatgut, eine Säschiene sowie eine Packerwalze umfasst. Bei entsprechender Ausgestaltung der Bauteile kann hierbei auch eine herkömmliche Sämaschine verwendet werden.

Vorteilhaft ist es auch, wenn als Pflanzeinrichtung ein Einzelkornsaatgerät an der Maschine angeordnet oder auf diese aufsattelbar ist. Hierzu ist es vorteilhaft, wenn der Vorratsbehälter mit der Entnahmeeinrichtung eine austauschbar an der kombinierten Maschine angeordnete Einheit bildet.

Beinhaltet das Einzelkornsaatgerät ein Dammformblech, kann die Aussaat ebenfalls in einem Arbeitsgang mit dem Dammaufbau erfolgen. Ist eine Säschar des Einzelkornsaatgerätes in einer Ausnehmung des Dammformbleches angeordnet, kann die Saat direkt in den entstehenden Damm eingebracht werden, wodurch eine sehr exakte Tiefenführung erreicht werden kann.

Gemäß einer anderen vorteilhaften Ausführung ist vorgesehen, dass die Maschine als Aushebemaschine zum Anschluss an einen Schlepper ausgeführt ist.

Ebenso ist es möglich, dass die Maschine mit einem Schlepper kombiniert ist, wobei das Lockerungswerkzeug direkt an dem Schlepper angeordnet ist. Die Maschine verfügt somit über kein eigenes Fahrwerk. Die Tiefenführung der Werkzeuge kann hierbei beispielsweise über Tasträder erreicht werden.

Gemäß einer vorteilhaften Weiterbildung der mit einem Schlepper kombinierten Maschine ist der Schlepper in Arbeitsstellung im wesentlichen nur durch das Gewicht des Vorratsbehälters belastet. Durch eine günstige Konstruktion kann hierbei eine Gewichtsverteilung erreicht werden, bei welcher das Gewicht der angebauten Maschine den Schlepper kaum belastet, während die Einrichtung zum Enddammaufbau vorteilhaft belastet wird.

Zusätzlich können an der Maschine weitere Werkzeuge, insbesondere als Vorlaufwerkzeuge, angeordnet sein. Vorteilhaft ist es beispielsweise, wenn als Vorlaufwerkzeug eine Einebnungsschiene oder Federzinken angeordnet sind. Ebenso kann als zusätzliches Werkzeug ein Düngerstreuer angeordnet sein. Dieser ist vorzugsweise über die gesamte Arbeitsbreite angeordnet, so dass der Dünger wegeabhängig dosiert und eingearbeitet wird. Hierdurch kann ein weiterer Arbeitsgang eingespart werden, was den Kraftstoffverbrauch weiter senkt. Darüber hinaus kann der Dünger nahezu direkt an der Saatgutablagestelle ausgebracht werden, was zu einer verbesserten Wirkung führt.

Eine besonders vorteilhafte Weiterbildung der Erfindung sieht vor, dass die Zufuhr von Pflanzgut in einen Schöpfraum der Pflanzeinrichtung in Abhängigkeit von dem Füllstand in dem Schöpfraum steuerbar ist. Vorteilhafterweise weist die Pflanzeinrichtung hierzu eine Einrichtung zur Erfassung des Füllstandes in dem Schöpfraum auf. Hierdurch kann ein stets gleichbleibender Vorrat an Pflanzgut in dem Schöpfraum gewährleistet werden, wodurch eine sehr gleichmäßige Belegung der einzelnen Legebecher der Entnahmeeinrichtung erreicht wird. Doppelbelegungen und Fehlstellen werden hierdurch zuverlässig vermieden.

Ebenfalls vorteilhaft ist es, wenn die Pflanzeinrichtung eine Fördereinrichtung zum Transport des Pflanzgutes aus dem Vorratsbehälter in den Schöpfraum umfasst. Ist hierbei bei einer mehrreihigen Maschine jeweils zwei Reihen eine gemeinsame Fördereinrichtung zugeordnet ist, lässt sich eine besonders gleichmäßige Förderung von Pflanzgut in die Schöpfräume der einzelnen Reihen erreichen.

Bei einem Verfahren zur maschinellen Saatgutausbringung erfolgen die Arbeitsschritte Saatbeetbereitung, Aussaat und Enddammaufbau durch an einer landwirtschaftlichen Maschine angeordnete Werkzeuge. Erfindungsgemäß werden die genannten Arbeitsschritte gleichzeitig in einem einzigen Arbeitsgang durchgeführt. Hierbei wird zunächst der zu bearbeitende Boden durch Räder der Maschine überfahren, um den Boden gleichmäßig zu zerkleinern und zu zerkrümeln, was die folgende Pflanzung und insbesondere den Dammaufbau erleichtert. Anschließend wird durch ein Lockerungswerkzeug das Saatbeet bereitet, die Saat bzw. das Pflanzgut ausgebracht und schließlich der Enddamm aufgebaut. Die Räder der Maschine wirken hierbei ausschließlich vor der Lockerung des Bodens auf den Boden ein. Hierdurch kann eine schädliche Rückverdichtung des Bodens im Bereich der Fahrspuren wirkungsvoll vermieden werden. Eine besonders gleichmäßige Zerkleinerung des Bodens kann erreicht werden, wenn nahezu die gesamte Bearbeitungsbreite der landwirtschaftlichen Maschine durch die Räder der Maschine überfahren wird. Dies kann beispielsweise durch Breitreifen der Maschine realisiert werden, welche nur einen geringen Druck auf den Boden ausüben.

Durch die gleichmäßige Zerkrümelung des Bodens durch die Räder kann eine besonders günstige und feine Krümelstruktur erreicht werden, so dass das Verfahren auch auf schweren Böden durchgeführt werden kann.

Weitere Vorteile der Erfindung sind im Zusammenhang mit den nachfolgenden Ausführungsbeispielen beschrieben. Es zeigen:
- **Figur 1**: eine schematische Darstellung einer erfindungsgemäßen kom- binierten Maschine in einer Seitenansicht in gezogener Ausfüh- rung,
- **Figur 2**: eine schematische Vorderansicht der erfindungsgemäßen Ma- schine mit pendelnder Radaufhängung im Schnitt,
- **Figur 3**: eine schematische Draufsicht der erfindungsgemäßen Maschi- ne mit schwenkbaren Rädern,
- **Figur 4**: eine schematische Darstellung einer erfindungsgemäßen Ma- schine als Aushebemaschine und
- **Figur 5**: eine weitere Ausführungsform einer erfindungsgemäßen Ma- schine mit einer verbesserten Pflanzeinrichtung.
- **Figur 6**: eine weitere Ausführungsform einer erfindungsgemäßen Ma- schine, bei welcher als Pflanzeinrichtung eine Aussaateinrich- tung für Getreide angeordnet ist,
- **Figur 7**: eine schematische Darstellung eines Dammformbleches, an welchem eine Schar höhenverstellbar befestigt ist.

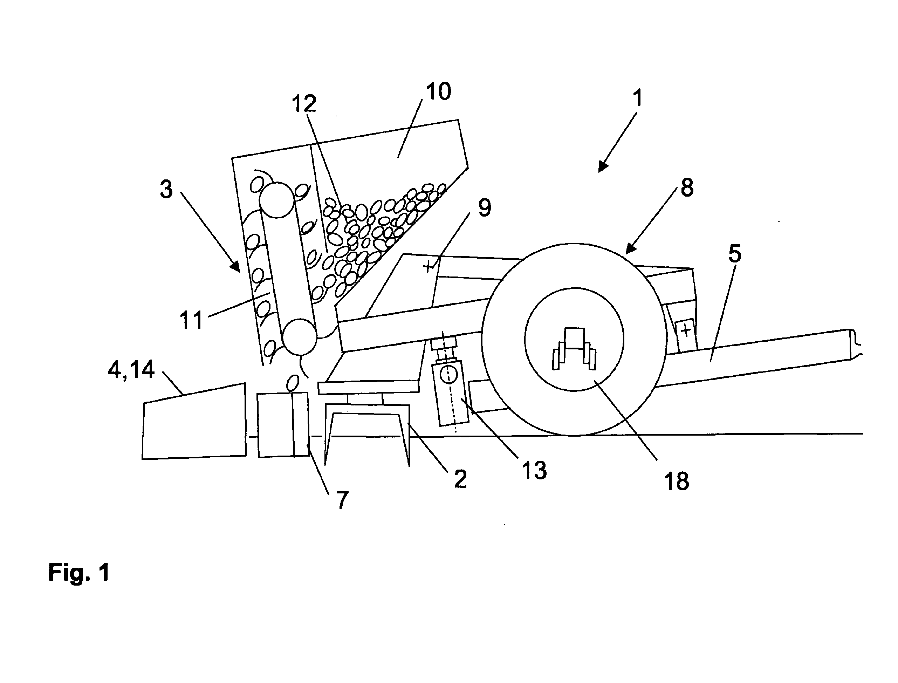

Figur 1 zeigt eine erfindungsgemäße kombinierte landwirtschaftliche Maschine 1 in gezogener Ausführung in einer Seitenansicht. Die Maschine 1 weist ein Lockerungswerkzeug 2, eine Pflanzeinrichtung 3 sowie eine Einrichtung zum Enddammaufbau 4 auf. Die Einrichtungen sind an einem gemeinsamen Tragrahmen 5 angeordnet, wodurch die Arbeitsgänge Saatbeetbereitung, Pflanzung und Enddammaufbau in einem Arbeitsgang zusammengefasst werden können. Vorliegend ist die kombinierte Maschine 1 als gezogene Maschine ausgeführt, welche über ein eigenes Fahrwerk 8 verfügt. Eine Ausführung als angebaute Aushebemaschine ist jedoch ebenfalls möglich. Vorliegend ist als Lockerungswerkzeug 2 eine Kreiselegge vorgesehen, welche eine besonders gute Saatbeetbereitung ermöglicht. Die Egge ist hierbei mit einer herkömmlichen Anbauvorrichtung 9 versehen, so dass sie aus der Maschine ausgebaut und zum Einsatz in andere Maschine entnommen werden kann. Dem Lockerungswerkzeug 2 in Fahrtrichtung nachgeordnet folgt eine Pflanzeinrichtung 3, welche vorliegend als Becherlegemaschine ausgeführt ist. Ein Hydraulikzylinder 13 dient dem Ausheben der Maschine.

Die Pflanzeinrichtung 3 besteht aus einem hydraulischen Kippbunker als Vorratsbehälter 10 für das Saatgut, einem umlaufenden Becherwerk 11 zum Vereinzeln und Fördern des Saatgutes, sowie einer Setzschar 7. Das Pflanzgut, insbesondere Saatkartoffeln 12, wird über das Becherwerk 11 in einer von der Schar 7 gezogenen Furche abgelegt. Die Schare können beispielsweise als höhenverstellbare Doppelscheibenschare ausgeführt sein, andere Ausführungen sind jedoch ebenso möglich. Eventuell vorhandene Pflanzenreste, z. B. aus der Winterbegrünung, werden durch die Scheibenschare zerschnitten und verursachen somit keine Verstopfungen. Um den zwischen den beiden Scheiben der Schar noch verbleibenden Erdsteg zu brechen und eine mittige Knollenablage zu erreichen, ist zwischen den beiden Scheiben ein höhenverstellbarer Kammbrecher angeordnet (hier nicht dargestellt). Durch einen Hydraulikzylinder kann der Vorratsbehälter in seiner Stellung gekippt werden, so dass eine konstante Förderung des Pflanzgutes 12 möglich ist.

Vorliegend ist zum Enddammaufbau ein Dammformblech 14 der Pflanzeinrichtung 3 nachgeordnet, welches für einen stabilen Enddammaufbau in einem Arbeitsgang mit Saatbeetbereitung und Pflanzung sorgt. Erfindungsgemäß sind hierbei durch den kompakten Aufbau der Maschine 1 keine dem Lockerungswerkzeug 2 nachgeordneten Räder 18 nötig, wie dies bei bekannten Maschinen des Standes der Technik der Fall ist. Gemäß der Maschinen des Standes der Technik erfolgt die Saatbeetbereitung in einem der Pflanzung vorgeschalteten separaten Arbeitsgang. Anschließend wird der bereits gelockerte Boden mit einer Pflanzmaschine und häufig mit einer anschließenden Dammfräse überfahren, wobei eine Verdichtung und Verfestigung des bereits gelockerten Bodens durch die Räder der entsprechenden Maschinen erfolgt.

Bei der vorliegenden Maschine 1 sind daher erfindungsgemäß Räder 18 zum Abstützen der Maschine 1 nur in Fahrtrichtung vor dem Lockerungswerkzeug 2 angeordnet, was durch den kompakten Aufbau der Maschine 1 ermöglicht wird. Die vorliegende Maschine 1 ist mit Breitreifen 15 ausgestattet, welche die gesamte Bearbeitungsbreite der Maschine 1 nahezu vollständig überdecken. Durch die erheblich größere Aufstandsfläche wird hierdurch nur ein sehr geringer Druck, welcher weit unter 1 bar liegt, auf den Boden aufgebracht, so dass durch die vorgeordneten Räder 18 der Maschine keine nennenswerte Bodenverdichtung stattfindet. Durch das Überfahren der gesamten Bearbeitungsbreite wird darüber hinaus der Boden gleichmäßig zerkrümelt und im Boden enthaltene Kluten zerkleinert. Die verbleibenden kleinen Stege zwischen den Rädern werden bei entsprechender Anordnung durch die Schlepperräder überfahren, so dass das Gewicht gleichmäßig über die gesamte Arbeitsbreite verteilt wird. Durch die Zerkleinerung und Zerkrümelung des Bodens und das Vermeiden von Nachverdichtungen durch Maschinenräder wird der Enddammaufbau erheblich erleichtert. Darüber hinaus kann durch die breitere Aufstandsfläche eine konstante Pflanztiefe, welche weitgehend unabhängig vom Füllstand des Vorratsbehälters 10 ist, erreicht werden. Vorliegend ist eine Ausführung der Maschine 1 mit vier Rädern 18 mit Breitreifen gezeigt, welche auch ein Befahren von Straßen ermöglicht. Ebenso kann jedoch auch statt der Räder 18 nur eine die gesamte Arbeitsbreite überdeckende Walze angeordnet sein.

Um eine kompakte Bauweise der Maschine 1 zu erreichen, ist der Vorratsbehälter 10 oberhalb der Lockerungsvorrichtung 9 angeordnet. Durch die erfindungsgemäße Anordnung des Vorratsbehälters 10 kann der Schwerpunkt der Maschine 1 in Fahrtrichtung nach vorne verlagert werden, so dass keine zusätzlichen Räder 18 mehr hinter dem Lockerungswerkzeug 2 nötig sind. Da durch die erfindungsgemäße Anordnung der Räder 18 keine Nachverfestigung des Bodens mehr erfolgt, kann unmittelbar an die Pflanzmaschine 3 ein Dammformblech 14 anschließen, wobei auch auf schweren Böden gleichmäßige, glatte und stabile Dämme erreicht werden können.

In der gezeigten Ausführung ist die Pflanzeinrichtung 3 der Maschine durch eine Becherlegeeinrichtung gebildet. Ebenso kann jedoch auch statt der Becherfördereinrichtung eine Riemenfördereinrichtung angebaut sein.

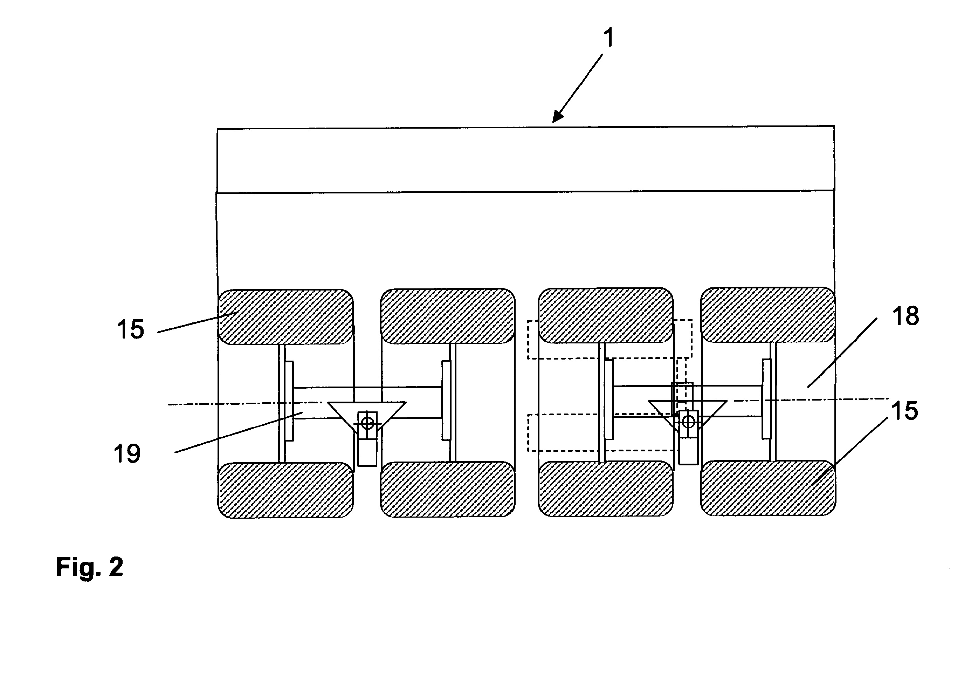

Figur 2 zeigt eine schematische Vorderansicht der erfindungsgemäßen Maschine 1 mit einer pendelnden Radaufhängung. Hierfür sind jeweils zwei Räder 18 mit einer gemeinsamen Achse 19 verbunden, welche pendelnd an dem Tragrahmen 5 gelagert ist. Hierdurch ist auch auf unebenen Böden eine exaktere Tiefenführung möglich, welche ansonsten nur mit einer Walze erreicht werden kann.

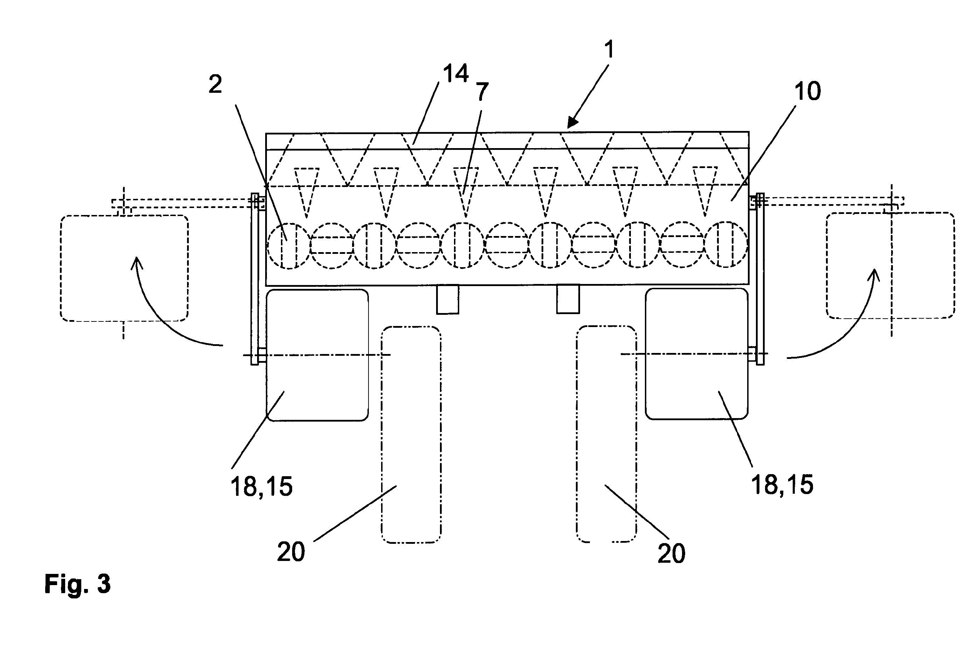

Figur 3 zeigt eine weitere vorteilhafte Ausführung der erfindungsgemäßen Maschine 1 mit schwenkbaren Rädern 18 in einer schematischen Draufsicht. Da bei mehrreihiger Ausführung der Maschine 1 die Arbeitsbreite die Spurweite des Schleppers übersteigt, ist es beispielsweise möglich, zwei Breitreifen 15 zur Tiefenführung und Rückverfestigung des Bodens derart an der Maschine 1 anzuordnen, dass diese weitgehend neben den hier strichpunktiert dargestellten Schlepperrädern 20 laufen, wenn die Maschine 1 in Arbeitsstellung an den Schlepper angekoppelt ist. Um bei Straßenfahrt die zulässige Höchstbreite nicht zu überschreiten, können die Räder 18 um 90° in die jeweilige Fahrtrichtung geschwenkt werden (gestrichelte Darstellung). Hierdurch ist es möglich, die Maschine 1 in einer um 90° versetzten Richtung an einen Schlepper anzukoppeln. Vorteilhafterweise wird hierzu eine Seite der Maschine 1 mit dem Schlepper ausgehoben. In Arbeitsstellung wird dennoch nahezu die gesamte Arbeitsbreite der Maschine 1 überfahren, da der Platz zwischen den Rädern 18 der Maschine durch die Schlepperräder 20 überfahren wird. Vorliegend sind nur die Hinterräder des Schleppers angedeutet. Eine derartige Maschine 1 ist sowohl für mehrreihige Ausführungen wie auch für übliche vierreihige Ausführungen geeignet. Bei vierreihiger Ausführung ist es hierdurch auch möglich, die Dammbreite zu vergrößern, da die höchstzulässige Breite für Straßenfahrt die Arbeitsbreite nicht mehr limitiert.

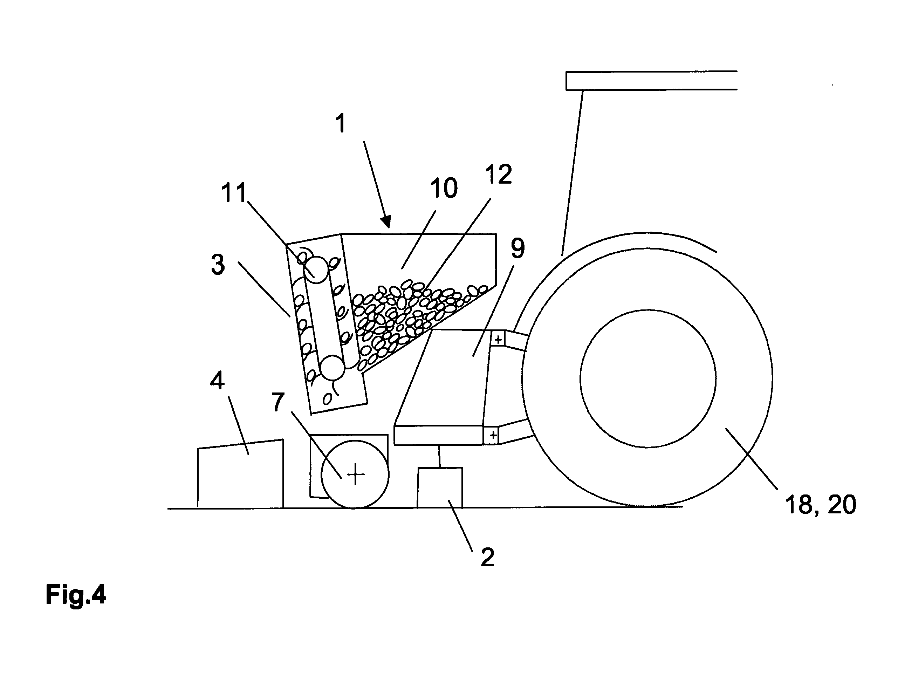

Figur 4 zeigt eine schematische Darstellung einer erfindungsgemäßen Maschine 1 als Aushebemaschine. Die Maschine 1 ist vorliegend mit einem Schlepper kombiniert und verfügt über kein eigenes Fahrwerk 8. Die Maschine 1 kann hierdurch ebenfalls besonders kompakt ausgeführt werden. Die Maschine 1 ist als Aushebemaschine an einen Schlepper anbaubar, wobei durch entsprechende Anordnung der Komponenten der Maschine 1 erreicht wird, dass das Gewicht des Anbaus in Arbeitsstellung weitgehend neutral gegenüber dem Schlepper verhält. Im wesentlichen ist der Schlepper nur durch das Gewicht des Vorratsbehälters 10 belastet, der Großteil des Anbaugewichts stützt sich auf dem Dammformblech 14 ab. Hierdurch wird das Dammformblech 14 bzw. die Einrichtung zum Enddammaufbau 4 vorteilhaft belastet, was zu einem verbesserten Dammaufbau führt. Insbesondere bei einem geringen Füllstand des Vorratsbehälters 10 wirkt sich diese Anordnung positiv aus.

Für Straßenfahrt kann die Maschine 1 durch die Anbauhydraulik des Schleppers ausgehoben werden. Durch die kompakte Anordnung und die Möglichkeit des Anschlusses an einen herkömmlichen Schlepper kann diese Maschine 1 preisgünstig ausgeführt werden und ist somit auch für kleine Betriebe nutzbar.

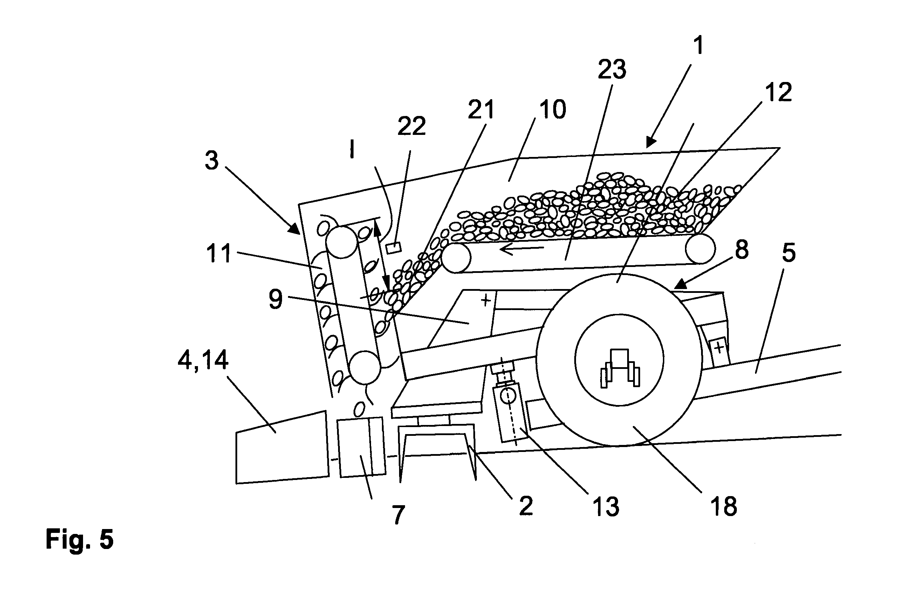

Eine weitere Ausführungsform einer erfindungsgemäßen Maschine 1 mit einer verbesserten Pflanzeinrichtung 3 ist in Figur 5 schematisch dargestellt. Die Pflanzeinrichtung 3 gemäß der vorliegenden Darstellung besteht aus einem fest angeordneten Vorratsbehälter 10, welchem ein Schöpfraum 21 für das Pflanzgut 12 zugeordnet ist. Als Entnahmeeinrichtung weist die Pflanzeinrichtung 3 auch hier ein umlaufendes Becherwerk 11 auf. Erfindungsgemäß weist die Pflanzeinrichtung 3 eine Einrichtung zur Erfassung des Füllstandes in dem Schöpfraum 21 auf, welche beispielsweise als optischer Sensor 22 ausgeführt ist. Mittels dieser Einrichtung ist es möglich, die Zufuhr von Pflanzgut 12 in den Schöpfraum 21 in Abhängigkeit von der Höhe des Füllstands in dem Schöpfraum 21 zu steuern, wodurch eine im wesentlichen gleichbleibende, optimale Füllstandshöhe erreicht wird. Weiterhin ist hierdurch auch die Länge I der Rüttelstrecke stets gleich lang. Durch das Rütteln des Pflanzgutes 12 auf der Rüttelstrecke werden Mehrfachbelegungen der einzelnen Legebecher der Entnahmeeinrichtung verhindert.

In bekannten Vorrichtungen des Standes der Technik war die Höhe des Füllstandes im Schöpfraum 21 abhängig von dem Vorrat an Pflanzgut 12 in dem Vorratsbehälter 10. Hierdurch war auch die Länge der Rüttelstrecke I von dem restlichen Vorrat an Pflanzgut abhängig. Bei hohem Füllstand im Schöpfraum 21 führte dies durch eine zu kurze Rüttelstrecke zu Doppelbelegungen der einzelnen Legebecher der Entnahmeeinrichtung, während bei niedrigem Füllstand Fehlstellen zu erwarten waren. Eine Korrektur der Einstellungen des Rüttelaggregates während des Betriebes war nur sehr eingeschränkt möglich.

In der gezeigten Darstellung wird die gleichbleibende Füllstandshöhe in dem Schöpfraum 21 durch eine Fördereinrichtung 23 erreicht, welche die Zufuhr von Pflanzgut 12 in den Schöpfraum 21 unterbricht, sobald ein voreingestellter, optimaler Füllstand erreicht ist. Eine optische Kontrolle der Belegung der Entnahmeeinrichtung durch den Bediener wie im Stand der Technik ist hierdurch nicht mehr nötig. Kontrolle und Belegung der Legebecher kann vom Schlepperfahrer direkt während der Fahrt eingesehen werden.

Um bei mehrreihigen Maschinen 1 eine möglichst gleichmäßige Verteilung des Pflanzgutes 12 auf die einzelnen Reihen zu erreichen, sind vorzugsweise zwei oder mehr Fördereinrichtungen 23 nebeneinander in dem Vorratsbehälter 10 angeordnet. Insbesondere ist es vorteilhaft, wenn der Schöpfraum 21 zweier Reihen durch eine gemeinsame Fördereinrichtung 23 beschickt wird. Hierdurch ist bei geringem baulichen Aufwand eine weitgehend gleichmäßige Versorgung aller Schöpfräume 21 der Maschine 1 gewährleistet.

Im gezeigten Beispiel ist als Entnahmeeinrichtung ein Becherlegewerk 11 vorgesehen, ebenso kann jedoch auch ein Riemenlegewerk angeordnet sein. Weiterhin kann auch eine Fördereinrichtung 23 je Reihe bzw. Entnahmeeinrichtung angeordnet sein, was jedoch den baulichen Aufwand und die Kosten erhöht.

Da die erfindungsgemäße Maschine 1 keine den Boden nachverdichtenden Räder aufweist, ist es möglich, die Arbeitsgänge Saatbeetbereitung, Pflanzung und Dammformung in einem Arbeitsgang in einer Maschine zusammenzufassen. Hierdurch ergibt sich eine erhebliche Kraftstoffersparnis sowie eine erhebliche Ersparnis an kostenintensiven Arbeitsstunden. Da ein separater vorgeschalteter Lockerungsvorgang zur Saatbeetbereitung entfällt, ergibt sich weiterhin eine Ersparnis an Schlepperstunden. Der Ernteertrag kann durch die erfindungsgemäße Maschinenkombination gesteigert werden, da eine gleichbleibende Pflanztiefe und exakte mittige Ablage des Pflanzgutes 12 erfolgt. Insbesondere an Seitenhängen kann ein außenmittiger Versatz der Ablegestelle des Pflanzgutes 12 nicht mehr auftreten. Durch die stets mittige Knollenablage kann ein Grünanteil der Ernte nahezu vollständig vermieden werden.

Da die Werkzeuge an einem Traggestell 5 angeordnet sind, kann darüber hinaus bei der kombinierten Maschine 1 auch eine Kostenersparnis gegenüber Einzelmaschinen erzielt werden. Daneben kann durch die Zusammenfassung dreier Arbeitsgänge in einer Maschine ein Witterungsrisiko weitgehend ausgeschaltet werden, da kein zeitlicher Versatz zwischen den einzelnen Arbeitsgängen mehr vorhanden ist. Da durch die kombinierte Maschine 1 keine wesentliche Bodenverdichtung mehr stattfindet, kann darüber hinaus auch der Ertragsanteil des Vorbeetes erheblich gesteigert werden.

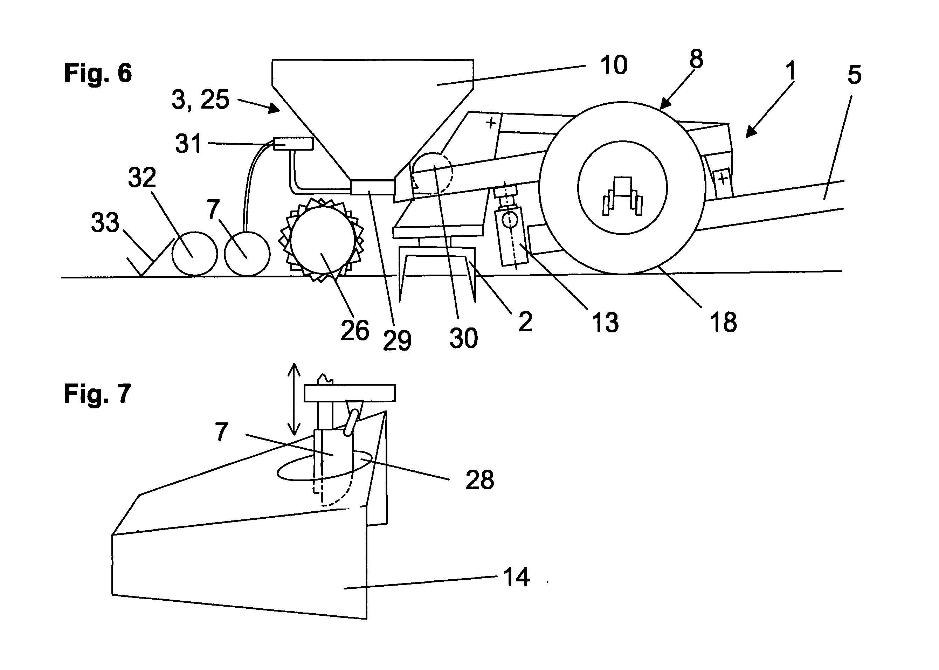

Figur 6 zeigt eine weitere Ausführungsform der erfindungsgemäßen Maschine, bei welcher als Pflanzeinrichtung 3 eine Aussaateinrichtung 25, vorliegend eine Drillmaschine zur Getreideaussaat, angeordnet ist. Die kombinierte landwirtschaftliche Maschine 1 ist hierbei derart ausgeführt, dass über eine entsprechende Aufsattelvorrichtung oder sonstige Anbauvorrichtungen verschiedene Pflanzeinrichtungen bzw. Aussaateinrichtungen an die Maschine angebaut werden können. Anstelle der in Figur 1 dargestellten Baueinheit, welche einen Vorratsbehälter 10, die Entnahmeeinrichtung 11, das Dammformblech 14 und die Setzschar 7 umfasst, ist gemäß der vorliegenden Darstellung eine Drillmaschine zur Getreideaussaat an die Maschine 1 angebaut. Die Drillmaschine umfasst gemäß der vorliegenden Darstellung ebenfalls einen Vorratsbehälter 10, eine Entnahmeeinrichtung für das Saatgut bestehend aus einem Dosiergerät 29 sowie einem Gebläse 30, welches das Saatgut zu einem Verteilerkopf 31 fördert, und eine Säschiene mit mehreren Säscharen 7. Bei entsprechender konstruktiver Abstimmung der einzelnen Bauteile aufeinander kann hierbei auch eine herkömmliche Aussaateinrichtung an die kombinierte landwirtschaftliche Maschine 1 angebaut oder auf diese aufgesattelt werden. Die Aussaateinrichtung 25 umfasst weiterhin eine Packerwalze 26, um eine für die Getreideaussaat erforderliche Rückverfestigung des Bodens zu erreichen. Zusätzlich sind gemäß der vorliegenden Darstellung eine Druckrolle 32 sowie ein Striegel 33 in der Aussaateinrichtung 25 beinhaltet, um die Saatfurche zu schließen.

Ebenso ist es jedoch möglich, andere Pflanz- bzw. Aussaateinrichtungen 3, 25 an die Maschine 1 anzubauen. Insbesondere ist es vorteilhaft, Einzelkornsaatgeräte an die kombinierte landwirtschaftliche Maschine 1 anzubauen. Hierzu kann beispielsweise das Dammformblech 14, evtl. mit einer an ihm angeordneten Säschar 7, austauschbar an der Maschine 1 angeordnet sein, so dass je nach Erfordernissen verschiedene Dammformbleche eingesetzt werden können.

Figur 7 zeigt eine schematische Darstellung eines Dammformbleches 14, bei welchem eine Setzschar 7 verstellbar mit diesem verbunden ist. Ist die Setzschar 7 höhenverstellbar an der Einrichtung zum Enddammaufbau 4 angeordnet, kann eine besonders exakte Saatgutablage in einer konstanten Tiefe erreicht werden.

Gemäß der Darstellung der Figur 7 ist hierbei die Setzschar oder Säschar 7 in einer Ausnehmung 28 des Dammformbleches 14 angeordnet. Hierdurch ist es möglich, das Saatgut in den entstehenden Damm einzubringen, wodurch eine äußerst exakte Tiefenführung erreicht werden kann. Insbesondere ist diese Anordnung vorteilhaft in Verbindung mit einem Einzelkornsaatgerät. Zunehmend setzt es sich durch, beispielsweise auch Mais auf Dämmen anzubauen, da hierdurch ein weitgehend konstantes und gleichmäßiges Temperaturniveau innerhalb des Dammes erreicht werden kann. Mit dem erfindungsgemäßen Dammformblech 14 ist es somit möglich, in einem Arbeitsgang einen Damm aufzubauen sowie das Saatkorn einzulegen, wobei zugleich auch ein Düngemittel bzw. in der Maissaat Phosphor mit in den Boden eingebracht werden kann.

Die Vorteile der erfindungsgemäßen kombinierten landwirtschaftlichen Maschine 1 kommen somit auch in Verbindung mit einem Aussaatgerät für Getreide oder einem Gerät zur Einzelkornaussaat voll zum Tragen, da ein mehrmaliges Überfahren des zu bearbeitenden Bodens entfällt und keine Verdichtung im Bereich der Fahrspuren des Schleppers entsteht. Hierdurch kann ein besonders gleichmäßiges Aufgehen der Saat erreicht werden und der Ernteertrag gesteigert werden. Zugleich sind durch die vielseitigen Einsatzmöglichkeiten der kombinierten landwirtschaftlichen Maschine 1 oft nur Einzelteile der anzubauenden Maschinen erforderlich, so dass hierdurch auch eine Kostenersparnis möglich ist.

Die Erfindung ist nicht durch die dargestellten Ausführungsbeispiele beschränkt. So kann die Maschine statt wie dargestellt als vierreihige Maschine auch in anderen mehrreihigen Ausführungen gebaut werden oder es kann statt des dargestellten Becherförderwerks ein Riemenförderwerk eingesetzt werden. Ebenso kann mit der Maschine neben Kartoffeln auch anderes Pflanzgut bzw. Sämereien, beispielsweise Möhren oder Zuckerrüben, gepflanzt werden. Die Maschine ist nicht nur als Pflanzmaschine, sondern auch als Maschine zum Dammformen einsetzbar.

Vorteilhaft ist bei der erfindungsgemäßen Maschine, dass nach dem Dammaufbau keine weiteren Arbeitsgänge mehr erforderlich sind. Dadurch können die Dämme in beliebiger Anzahl und auch in beliebigen Abständen angeordnet werden. Es besteht keine Gefahr einer nachträglichen Beschädigung der Dammflanken oder des entstehenden Produkts. Beim Anbau im Beetverfahren können hierdurch auch breitere Reifen als üblich verwendet werden. Zusätzlich können zur Erleichterung des Enddammaufbaus Häufelscheiben oder Zudeckscheiben der Pflanzeinrichtung zugeordnet sein. Weitere Abwandlungen im Rahmen der Patentansprüche fallen ebenfalls unter die Erfindung.

## Patentansprüche

1. Kombinierte landwirtschaftliche Maschine (1) umfassend eine Pflanzeinrichtung (3), insbesondere eine Kartoffellegeeinrichtung, mit wenigstens einem Vorratsbehälter (10), einer diesem zugeordneten Entnahmeeinrichtung und einer Setzschar (7), ein in Fahrtrichtung vor der Pflanzeinrichtung (3) angeordnetes Lockerungswerkzeug (2) zur Saatbeetbereitung, sowie eine nachgeordnete Einrichtung zum Enddammaufbau (4), wobei in Fahrtrichtung vor dem Lockerungswerkzeug (2) ein oder mehrere Räder (18) zum Abstützen der Maschine (1) angeordnet sind, **dadurch gekennzeichnet, dass** das/die Rad/Räder (18) zum gleichmäßiger Zerkleinern des Bodens mit Breitreifen (15) versehen ist/sind und die Bearbeitungsbreite der Maschine (1) weitgehend überdecken.

2. Maschine nach dem vorherigen Anspruch, **dadurch gekennzeichnet, dass** die Entnahmeeinrichtung ein umlaufendes Becherwerk (11) ist.

3. Maschine nach dem vorherigen Anspruch, **dadurch gekennzeichnet, dass** das Becherwerk (11) durch eine federbelastete Walze angetrieben ist, welche mit einem Profil der Räder (18) in Eingriff steht.

4. Maschine nach einem der vorherigen Ansprüche, **dadurch gekennzeichnet, dass** in Fahrtrichtung nach dem Lockerungswerkzeug (2) keine weiteren Räder, insbesondere zum Abstützen der Maschine angeordnet sind

5. Maschine nach einem der vorherigen Ansprüche, **dadurch gekennzeichnet, dass** das Lockerungswerkzeug (2) als Kreiselegge ausgeführt ist.

6. Maschine nach einem der vorherigen Ansprüche, **dadurch gekennzeichnet, dass** das Lockerungswerkzeug (2) als Zinkenrotor ausgeführt ist.

7. Maschine nach einem der vorherigen Ansprüche, **dadurch gekennzeichnet, dass** der Pflanzeinrichtung (3) Häufelkörper und/ oder Zudeckscheiben zugeordnet sind.

8. Maschine nach einem der vorherigen Ansprüche, **dadurch gekennzeichnet, dass** zum Enddammaufbau ein Dammformblech (14) nach der Pflanzeinrichtung (3) angeordnet ist.

9. Maschine nach einem der vorherigen Ansprüche, **dadurch gekennzeichnet, dass** die Setzschar (7) als Doppelscheibenschar ausgebildet ist.

10. Maschine nach einem der vorherigen Ansprüche, **dadurch gekennzeichnet, dass** der Doppelscheibenschar ein Kammbrecher zugeordnet ist.

11. Maschine nach einem der vorherigen Ansprüche, **dadurch gekennzeichnet, dass** die Setzschar (7) verstellbar mit der Einrichtung zum Enddammaufbau (4), insbesondere einem Dammformblech (14), verbunden ist.

12. Maschine nach einem der vorherigen Ansprüche, **dadurch gekennzeichnet, dass** die Maschine (1) als gezogene Maschine (1) ausgeführt ist.

13. Maschine nach einem der vorherigen Ansprüche, **dadurch gekennzeichnet, dass** in Breitenrichtung der Maschine (1) vier Räder (18) angeordnet sind.

14. Maschine nach einem der vorherigen Ansprüche, **dadurch gekennzeichnet, dass** die Räder (18) in Breitenrichtung der Maschine (1) pendelnd aufgehängt sind.

15. Maschine nach einem der vorherigen Ansprüche, **dadurch gekennzeichnet, dass** die Maschine (1) mehrreihig, insbesondere sechs- oder achtreihig, ausgeführt ist und bei Straßenfahrt um 90° gedreht an einen Schlepper ankoppelbar ist.

16. Maschine nach einem der vorherigen Ansprüche, **dadurch gekennzeichnet, dass** vor dem Lockerungswerkzeug (2) eine Walze zum Zerkleinern des Bodens angeordnet ist.

17. Maschine nach einem der vorherigen Ansprüche, **dadurch gekennzeichnet, dass** der Vorratsbehälter (10) der Pflanzeinrichtung (3) über dem Lockerungswerkzeug (2) angeordnet ist und sich der Schwerpunkt der Maschine (1) nahe der Radachse befindet.

18. Maschine nach einem der vorherigen Ansprüche, **dadurch gekennzeichnet, dass** der Vorratsbehälter (10) als hydraulischer Kippbunker ausgeführt ist.

19. Maschine nach einem der vorherigen Ansprüche, **dadurch gekennzeichnet, dass** das Lockerungswerkzeug (2) zum Einsatz in anderen Maschinen aus der Maschine (1) entnehmbar ist.

20. Maschine nach einem der vorherigen Ansprüche, **dadurch gekennzeichnet, dass** die Pflanzeinrichtung (3) absattelbar an der Maschine (1) angeordnet ist.

21. Maschine nach einem der vorherigen Ansprüche, **dadurch gekennzeichnet, dass** zum Absatteln der Pflanzeinrichtung (3) der Vorratsbehälter (10) mit der Entnahmeeinrichtung, die Setzschar (7) und die Einrichtung zum Enddammaufbau (4) eine Baueinheit bilden.

22. Maschine nach einem der vorherigen Ansprüche, **dadurch gekennzeichnet, dass** anstelle der Pflanzeinrichtung (3) eine Aussaateinrichtung (25), insbesondere eine Drillmaschine, umfassend zumindest einen Vorratsbehälter (10), eine Entnahmeeinrichtung für das Saatgut, eine Säschiene mit Säscharen (7) sowie eine Packerwalze (26), auf die Maschine (1) aufsattelbar ist.

23. Maschine nach einem der vorherigen Ansprüche, **dadurch gekennzeichnet, dass** als Pflanzeinrichtung (3) ein Einzelkornsaatgerät an der Maschine (1) angeordnet oder auf diese aufsattelbar ist.

24. Maschine nach einem der vorherigen Ansprüche, **dadurch gekennzeichnet, dass** das Einzelkornsaatgerät ein Dammformblech (14) beinhaltet.

25. Maschine nach einem der vorherigen Ansprüche, **dadurch gekennzeichnet, dass** eine Säschar (7) des Einzelkornsaatgerätes in einer Ausnehmung (28) des Dammformbleches (14) angeordnet ist.

26. Maschine nach einem der vorherigen Ansprüche, **dadurch gekennzeichnet, dass** die Maschine (1) als Aushebemaschine zum Anschluss an einen Schlepper ausgeführt ist.

27. Maschine nach dem vorherigen Anspruch, **dadurch gekennzeichnet, dass** in Arbeitsstellung der Maschine (1) der Schlepper im wesentlichen nur durch das Gewicht des Vorratsbehälters (10) belastet ist.

28. Maschine nach einem der vorherigen Ansprüche, **dadurch gekennzeichnet, dass** an der Maschine (1) weitere Werkzeuge, insbesondere Vorlaufwerkzeuge, angeordnet sind.

29. Maschine nach einem der vorherigen Ansprüche, **dadurch gekennzeichnet, dass** die Zufuhr von Pflanzgut (12) in einen Schöpfraum (21) der Pflanzeinrichtung (3) in Abhängigkeit von dem Füllstand in dem Schöpfraum (21) steuerbar ist.

30. Maschine nach einem der vorherigen Ansprüche, **dadurch gekennzeichnet, dass** die Pflanzeinrichtung (3) eine Einrichtung zur Erfassung des Füllstandes in dem Schöpfraum (21) aufweist.

31. Maschine nach einem der vorherigen Ansprüche, **dadurch gekennzeichnet, dass** die Pflanzeinrichtung (3) eine Fördereinrichtung (23) zum Transport des Pflanzgutes (12) aus dem Vorratsbehälter (10) in den Schöpfraum (21) umfasst.

32. Maschine nach einem der vorherigen Ansprüche, **dadurch gekennzeichnet, dass** die Maschine (1) als mehrreihige Maschine (1) ausgeführt ist, wobei jeweils zwei Reihen eine gemeinsame Fördereinrichtung (23) zugeordnet ist.

33. Verfahren zur maschinellen Saatgutausbringung, bei welchem die Arbeitsschritte Saatbeetbereitung, Aussaat sowie Enddammaufbau durch an einer landwirtschaftlichen Maschine (1) angeordnete Werkzeuge gleichzeitig in einem einzigen Arbeitsgang durchgeführt werden, wobei durch ein Lockerungswerkzeug (2) das Saatbeet bereitet, danach die Saat bzw. das Pflanzgut ausgebracht und schließlich der Enddamm aufgebaut wird, **dadurch gekennzeichnet, dass** zunächst der zu bearbeitende Boden über nahezu die gesamte Bearbeitungsbreite der landwirtschaftlichen Maschine (1) durch Räder (18) der Maschine (1) überfahren wird, um den Boden gleichmäßig zu zerkleinern und zu zerkrümeln, wobei die Räder (18) der Maschine (1) ausschließlich vor der Lockerung des Bodens auf den Boden einwirken.

## Claims

1. Combined agricultural machine (1) comprising a planting device (3), especially a potato-planting device having at least one storage container (10), an extraction device associated with it and a setting plough (7), a loosening tool (2) for seedbed preparation arranged in travelling direction before the planting device (3) as well as a downstream mounted end damming device (4), wherein one or several wheels (18) are placed in travelling direction before the loosening tool (2) for supporting the machine (1), **characterized in that** said wheel/wheels (18) is/are equipped with wide-base tyres (15) for uniformly disintegrating the soil and said wheel/wheels largely cover/s the cultivation preparation width of the machine (1).

2. Machine according to the previous claim, **characterized in that** the extraction device is a rotating bucket structure (11).

3. Machine according to the previous claim, **characterized in that** the bucket structure (11) is driven by a spring-loaded roller that is in engage with one profile of the wheels (18).

4. Machine according to one of the previous claims, **characterized in that** no more wheels especially for supporting the machine are placed in travelling direction after the loosening tool (2).

5. Machine according to one of the previous claims, **characterized in that** the loosening tool (2) is designed as a rotating harrow.

6. Machine according to one of the previous claims, **characterized in that** the loosening tool (2) is executed as a comb tooth rotor.

7. Machine according to one of the previous claims, **characterized in that** ridge elements and/or covering layers are allocated to the planting device (3).

8. Machine according to one of the previous claims, **characterized in that** a dam-forming sheet metal (14) is placed after the planting device (3) for building the final damming stage.

9. Machine according to one of the previous claims, **characterized in that** the setting plough (7) is constructed as a double-disk plough.

10. Machine according to one of the previous claims, **characterized in that** a comb breaker has been allocated to the double-disk plough.

11. Machine according to one of the previous claims, **characterized in that** the setting plough (7) is adjustably connected to the device for building the final dam structure (4), especially a dam-forming sheet (14):

12. Machine according to one of the previous claims, **characterized in that** the machine (1) is constructed as a dragged machine (1).

13. Machine according to one of the previous claims, **characterized in that** four wheels (18) are placed in the width direction of the machine (1).

14. Machine according to one of the previous claims, **characterized in that** the wheels 18 are pendulously suspended in the width direction of the machine (1).

15. Machine according to one of the previous claims, **characterized in that** the machine (1) is constructed in multiple rows, especially in six or eight rows and can be coupled to a tractor for road driving by rotating it 90°.

16. Machine according to one of the previous claims, **characterized in that** a roller for disintegrating the soil is placed before the loosening tool (2).

17. Machine according to one of the previous claims, **characterized in that** the storage container (10) of the planting device (3) is placed above the loosening tool (2) and the centre of gravity of the machine (1) is near the wheel axis.

18. Machine according to one of the previous claims, **characterized in that** the storage container (10) is constructed as a hydraulic tilting bunker.

19. Machine according to one of the previous claims, **characterized in that** the loosening tool (2) can be detached from the machine (1) for use in other machines.

20. Machine according to one of the previous claims, **characterized in that** the planting device (3) has been placed on the machine (1) in such a way that it can be dismounted.

21. Machine according to one of the previous claims, **characterized in that** for dismounting the planting device (3), the storage container (10) with the extraction device, the setting plough (7), and the device for the final dam-forming (4) constitute a building unit.

22. Machine according to one of the previous claims, **characterized in that** instead of the planting device (3), a seeding device (25), especially a drill seeder, with at least a storage container (10), an extraction device for the seed stock, a sowing beam with sowing ploughs (7) and a packing roller (26) can be mounted to the machine (1).

23. Machine according to one of the previous claims, **characterized in that** a single-grain seeding device as a planting device (3) is arranged on the machine (1) or can be mounted on it.

24. Machine according to one of the previous claims, **characterized in that** the single-grain seeding device contains a dam-forming sheet metal (14).

25. Machine according to one of the previous claims, **characterized in that** a setting plough (7) of the single-grain seeding device has been placed in a recess (28) of the dam-forming sheet metal (14).

26. Machine according to one of the previous claims, **characterized in that** the machine (1) is constructed as a lifting machine for connection to a tractor.

27. Machine according to one of the previous claims, **characterized in that** when the machine (1) is in operating position, the tractor largely bears only the load of the weight of the storage container (10).

28. Machine according to one of the previous claims, **characterized in that** more tools, especially tools running ahead, are arranged on the machine (1).

29. Machine according to one of the previous claims, **characterized in that** the supply of plant material (12) in a scoop chamber (21) of the planting device (3) can be adjusted depending on the filling level in the scoop chamber (21).

30. Machine according to one of the previous claims, **characterized in that** the planting device (3) has a device for registering the filling level in the scoop chamber (21).

31. Machine according to one of the previous claims, **characterized in that** the planting device (3) has a conveyor device (23) for transporting plant material (12) from the storage container (10) into the scoop chamber (21).

32. Machine according to one of the previous claims, **characterized in that** the machine (1) is constructed as a multiple-row machine (1), in which case one joint conveyor device (23) is assigned to every two rows.

33. Process for mechanical seeding production featuring the working stages of seedbed preparation, sowing and final damming, which take place in tools arranged in an agricultural machine (1) wherein the working stages mentioned above are carried out simultaneously in one single working process, and wherein a loosening tool (2) tills the seedbed, then the seed or plant material is brought out and finally the final dam is built, **characterized in that** the soil to be prepared for cultivation is initially driven over by the wheels (18) of the machine (1) almost over the entire cultivation width in order to uniformly disintegrate and crumble the soil, the wheels (18) of the machine (1) acting on the soil exclusively before it is loosened.

## Revendications

1. Machine agricole combinée (1), comportant un dispositif de plantation (3), en particulier un dispositif planteur de pommes de terre, avec au moins un réservoir (10), un dispositif de prélèvement attribué à ce dernier et un soc planteur (7), un outil de binage (2) disposé devant le dispositif de plantation (3) dans le sens de la circulation pour la préparation du lit de semences, ainsi qu'un dispositif agencé en aval pour la constitution de la butte d'extrémité (4), sachant qu'une ou plusieurs roues (18) sont disposées devant l'outil de binage (2) dans le sens de la circulation pour soutenir la machine (1), **caractérisée en ce que** la/les roue(s) (18) est/sont dotée(s) de pneumatiques larges (15) pour le concassage uniforme de la terre et qu'elle(s) recouvre(nt) une grande partie de la largeur de travail du sol de la machine (1).

2. Machine selon la revendication précédente, **caractérisée en ce que** le dispositif de prélèvement est un convoyeur à godets circulant (11).

3. Machine selon la revendication précédente, **caractérisée en ce que** le convoyeur à godets (11) est entraîné par un cylindre soumis à l'action d'un ressort, lequel cylindre est en prise avec un profilé des roues (18).

4. Machine selon l'une des revendications précédentes, **caractérisée en ce que**, dans le sens de la circulation, aucune roue supplémentaire n'est disposée après l'outil de binage (2), particulièrement pour soutenir la machine (1).

5. Machine selon l'une des revendications précédentes, **caractérisée en ce que** l'outil de binage (2) se présente sous la forme d'une herse rotative.

6. Machine selon l'une des revendications précédentes, **caractérisée en ce que** l'outil de binage (2) se présente sous la forme d'un rotor à dents.

7. Machine selon l'une des revendications précédentes, **caractérisée en ce que** des corps butteurs et/ou des recouvreurs à disque sont attribués au dispositif de plantation (3).

8. Machine selon l'une des revendications précédentes, **caractérisée en ce qu'**une tôle de buttage (14) est disposée après le dispositif de plantation (3) pour la constitution de la butte d'extrémité.

9. Machine selon l'une des revendications précédentes, **caractérisée en ce que** le soc planteur (7) se présente sous la forme d'un soc à double disque.

10. Machine selon l'une des revendications précédentes, **caractérisée en ce qu'**un concasseur à peigne est attribué au soc à double disque.

11. Machine selon l'une des revendications précédentes, **caractérisée en ce que** le soc planteur (7) est connecté de manière ajustable avec le dispositif pour la constitution de la butte d'extrémité (4), particulièrement avec une tôle de buttage (14).

12. Machine selon l'une des revendications précédentes, **caractérisée en ce que** la machine (1) se présente sous la forme d'une machine traînée (1).

13. Machine selon l'une des revendications précédentes, **caractérisée en ce que** quatre roues (18) sont disposées dans le sens de la largeur de la machine (1).

14. Machine selon l'une des revendications précédentes, **caractérisée en ce que** les roues (18) sont suspendues de manière oscillante dans le sens de la largeur de la machine (1).

15. Machine selon l'une des revendications précédentes, **caractérisée en ce que** la machine (1) se présente sous une forme à plusieurs rangées, particulièrement à six ou huit rangées, et que, tournée de 90 degrés, elle peut être attelée à un tracteur pour la circulation routière.

16. Machine selon l'une des revendications précédentes, **caractérisée en ce qu'**un cylindre est disposé avant l'outil de binage (2) pour concasser la terre.

17. Machine selon l'une des revendications précédentes, **caractérisée en ce que** le réservoir (10) du dispositif de plantation (3) est disposé au-dessus de l'outil de binage (2) et le centre de gravité de la machine (1) est proche de l'essieu des roues.

18. Machine selon l'une des revendications précédentes, **caractérisée en ce que** le réservoir (10) se présente sous la forme d'une trémie basculante hydraulique.

19. Machine selon l'une des revendications précédentes, **caractérisée en ce que** l'outil de binage (2) est démontable de la machine (1) en vue de l'utilisation dans d'autres machines.

20. Machine selon l'une des revendications précédentes, **caractérisée en ce que** le dispositif de plantation (3) est disposé de manière à pouvoir être désattelé de la machine (1).

21. Machine selon l'une des revendications précédentes, **caractérisée en ce que** pour le désattelage du dispositif de plantation (3), le réservoir (10) constitue une unité de construction avec le dispositif de prélèvement, le soc planteur (7) et le dispositif pour la constitution de la butte d'extrémité (4).

22. Machine selon l'une des revendications précédentes, **caractérisée en ce qu'**au lieu du dispositif de plantation (3), un dispositif d'ensemencement (25), particulièrement un semoir, comportant au moins un réservoir (10), un dispositif de prélèvement pour la semence, une barre de semoir avec socs d'ensemencement (7) ainsi qu'un rouleau packer (26), peut être attelé à la machine (1).

23. Machine selon l'une des revendications précédentes, **caractérisée en ce que** comme dispositif de plantation (3), un semoir monograine est disposé à la machine (1) ou peut être attelé à cette dernière.

24. Machine selon l'une des revendications précédentes, **caractérisée en ce que** le semoir monograine comporte une tôle de buttage (14).

25. Machine selon l'une des revendications précédentes, **caractérisée en ce qu'**un soc d'ensemencement (7) du semoir monograine est disposé dans un évidement (28) de la tôle de buttage (14).

26. Machine selon l'une des revendications précédentes, **caractérisée en ce que** la machine (1) se présente sous la forme d'une machine d'excavation destinée à être attelée à un tracteur.

27. Machine selon l'une des revendications précédentes, **caractérisée en ce que** le tracteur ne supporte essentiellement que le poids du réservoir (10) à la position de travail de la machine (1).

28. Machine selon l'une des revendications précédentes, **caractérisée en ce que** d'autres outils, particulièrement des outils marchent en avant, sont disposés à la machine (1).

29. Machine selon l'une des revendications précédentes, **caractérisée en ce que** l'amenée des plants (12) dans un compartiment de prélèvement (21) du dispositif de plantation (3) peut être commandée en fonction du niveau de remplissage du compartiment de prélèvement (21).

30. Machine selon l'une des revendications précédentes, **caractérisée en ce que** le dispositif de plantation (3) comporte un dispositif pour saisir le niveau de remplissage du compartiment de prélèvement (21).

31. Machine selon l'une des revendications précédentes, **caractérisée en ce que** le dispositif de plantation (3) comporte un dispositif de transport (23) pour le transport des plants (12) du réservoir (10) vers le compartiment de prélèvement (21).

32. Machine selon l'une des revendications précédentes, **caractérisée en ce que** la machine (1) se présente sous la forme d'une machine (1) à plusieurs rangées, sachant qu'un dispositif de transport (23) commun est attribué respectivement à deux rangées.

33. Procédé pour la distribution de semences à la machine, dans lequel les étapes de travail de préparation du lit de semences, d'ensemencement et de constitution de la butte d'extrémité sont exécutées simultanément, en une phase de travail individuelle, par des outils disposés sur une machine agricole (1), sachant qu'un outil de binage (2) prépare le lit de semences, les semences ou les plants sont ensuite distribués et la butte d'extrémité est enfin constituée, **caractérisé en ce que** le sol à travailler est d'abord parcouru par des roues (18) de la machine sur presque toute la largeur de travail de la machine agricole (1) pour concasser et émietter uniformément la terre, sachant que les roues (18) de la machine (1) agissent sur le sol exclusivement avant le binage de la terre.
